# EUROPEAN PATENT APPLICATION

(11) **EP 2 077 599 A1**
(43) Date of publication of application: **08.07.2009**
(21) Application number: 07425838.5
(22) Date of filing: 31.12.2007
(51) Int. Cl.: H01M 10/48, H01M 2/36, H01M 10/06

(54) **Independent monitoring device of the electrolyte level in electric accumulators for traction**

(71) Applicant: T.A.B.A. S.r.l., 26025 PANDINO (Cremona) (IT)
(72) Inventor:
(74) Representative: Faggioni, Carlo Maria

(57) **Abstract**

A monitoring device of the electrolyte (10) level in an accumulator for traction (3) is disclosed, comprising a probe of potential (9), inserted in a topping-up cap (1) and suitable to detect at the lower end thereof a difference of potential only when wet by the electrolyte, a pair of warning LEDs (11,12), and a control circuit (15), operatively connected to the probe, to the warning LEDs and to the terminals (5a,6a) of the electrodes, the control circuit activating the LEDs when it detects an inconsistency in the difference of potential between the electrodes (5,6) and to the probe.

## Description

The present invention concerns a monitoring device of the electrolyte level in electric accumulators.

As known, the batteries of electric accumulators for traction supply energy for the propulsion of electric motor vehicles, generally within plants, building sites, warehouses, railway parks, mostly for forklifts and electric locomotives and other electric vehicles. These batteries combine a remarkable duration of operation and good resistance to the mechanical stress which the vehicle containing them undergoes.

These electric energy accumulators typically consist of a plurality of 2-V elements, connected in series.

Each element consists of anodes and cathodes in flat plates, with active material supported by fibreglass felts, or by tubular plates wherein the active material is contained in small tubes of synthetic fibre. The plates are sunk in an electrolytic solution consisting of sulphuric acid and distilled water, the density whereof varies depending on the battery charge condition.

During use of the electric vehicle, electric energy is drained and hence the battery changes from a charged condition to a discharged condition, consequently it must be periodically recharged through a current rectifier. This charge/discharge cycle overheats the elements, causing continuous evaporation of the distilled water and causing, over time, a significant level drop.

Depending on the intensity of use of the vehicles whereon the accumulators for traction are mounted, topping up of electrolyte may be necessary also rather often.

Maintenance of the level of the electrolytic solution is decisive for accumulator life. It is hence essential to constantly monitor the state thereof and when necessary to proceed with topping up, i.e. with the input of amounts of distilled water up to the preset optimal level. Topping up may be performed manually or automatically through self-levelling systems.

The manual topping up operation is provided by opening a series of caps (at least one for each element) with a movable cover, through which distilled water is poured in.

The automatic topping up operation occurs through a system of self-levelling caps suitably connected so as to form a tubular network. This system is arranged during the first mounting of the accumulator. Through gentle pressure (which may be generated from a piezometric height slightly above the level of the accumulator), the distilled water enters the tubular system passing through a rotary flow indicator, capable of highlighting the flow of the liquid to the accumulator. When the rotary indicator stops, the distilled water has reached the same level in all the battery elements.

Regardless of the topping up procedure, so far the level monitoring operation provides in any case an active check by the user who, in one case, opens each cover to visually inspect the inside of each element and, in the other case, performs a single check of the tubular system.

This thorough check by the user is a cumbersome and not particularly enjoyable operation and sometimes it is hence performed at longer-than-required intervals. This has imaginable consequences on accumulator efficiency and duration.

The Applicant has therefore realised that there is the need of a more efficient system, which allows to detect immediately, at a glance, if the accumulator requires topping up. As a matter of fact, an immediately and easily detectable indication would allow to simplify the checking operation and hence to increase the chance of topping up operations being performed promptly.

The object of the present invention is hence that of providing an automatic monitoring device of the electrolyte levels in the elements of an accumulator for traction, which is also simple and inexpensive from a construction point of view.

Said object is achieved through a device as described in its essential features in the accompanying independent claim, the dependent claims concerning some preferred features of the invention.

In particular, according to the invention a device is provided fixed to the upper part of the electric accumulator, mounted on the cover thereof between the two electrodes of at least one of the elements making up the battery. The device incorporates both a cover for (automatic or manual) topping up of distilled water, and a probe of electric potential. In the upper part of the device there is further installed a printed circuit which acts as a small electronic unit capable of detecting and processing the differences of electric potential existing between the anode and the cathode of the element and a probe. When the level of the electrolyte solution is low compared to the desired level provided by the designer, the central unit detects an imbalance or an inconsistency between the two differences of electric potential it detects (the one between cathode and anode and the one to the probe), and hence turns on a red warning LED; on the contrary, if the level is above the minimum threshold which guarantees the good operation of the accumulator, the green LED lights up.

According to a particularly advantageous feature of the invention, the entire device is self-powered through the connection to the anode and to the cathode of the electric accumulator element whereon it is mounted.

Further features and advantages of the invention will in any case be more evident from the following detailed description of preferred embodiments thereof, given by way of example, and illustrated in the accompanying drawings, wherein:
fig. 1 is an interrupted perspective view, with parts removed, of the upper part of an accumulator element provided with the device according to a first embodiment of the invention;
fig. 2 is an interrupted elevation front view, partly in cross-section, of the device of fig. 1;
fig. 3 is a top plan view of fig. 2;
figs. 4A and 4B are perspective views of the topping-up cap, with a closed and open cover, respectively, according to the first embodiment of the invention;
fig. 5 is a similar view to fig. 1 of a second embodiment of the invention;
fig. 6 is a similar view to fig. 2 of the second embodiment;
fig. 7 is a top plan view of fig. 6; and
fig. 8 is a perspective view of the cap according to the second embodiment.

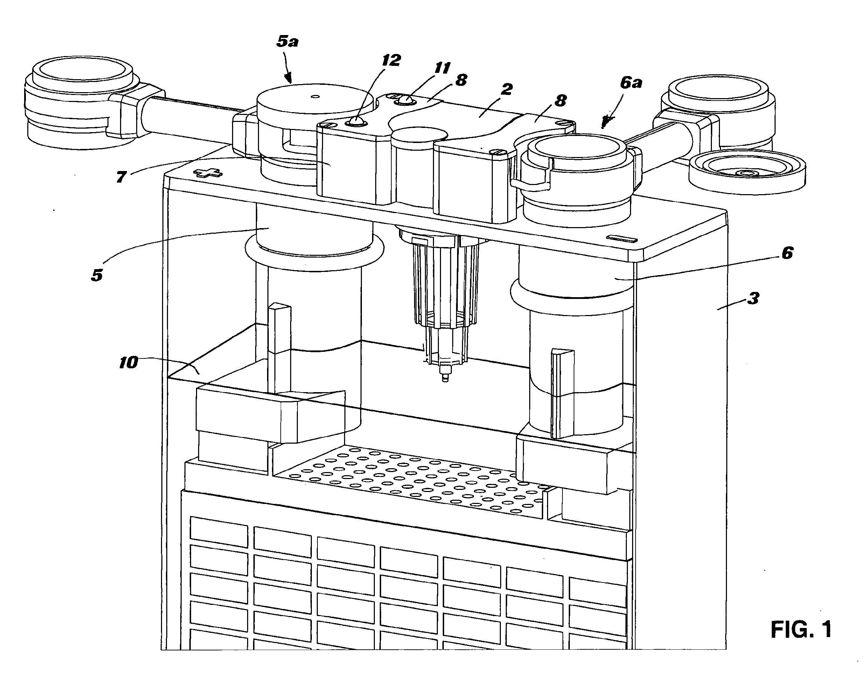

Fig. 1 shows an element 3 exemplifying an electric accumulator for traction. Element 3 contains in the lower part thereof a plurality of flat plates sunk in a liquid electrolyte 10, typically suitably diluted sulphuric acid.

To the plates there are connected two main electrodes, a cathode 5 and an anode 6, which protrude from the upper cover of the element with respective connecting terminals 5a and 6a.

Between the two electrodes, the upper cover of element 3 typically has a top-up (refilling) aperture wherein a cap 1 is inserted, provided with a small cover 2 capable of being opened.

Cap 1 may be substantially of a type known per se, for example model TPS 035 manufactured by Taba S.r.l. The cap is preferably of a snap-engageable type, for example because provided with a flexible lower skirt 1b, equipped with longitudinal notchings 17 and retaining tabs 16.

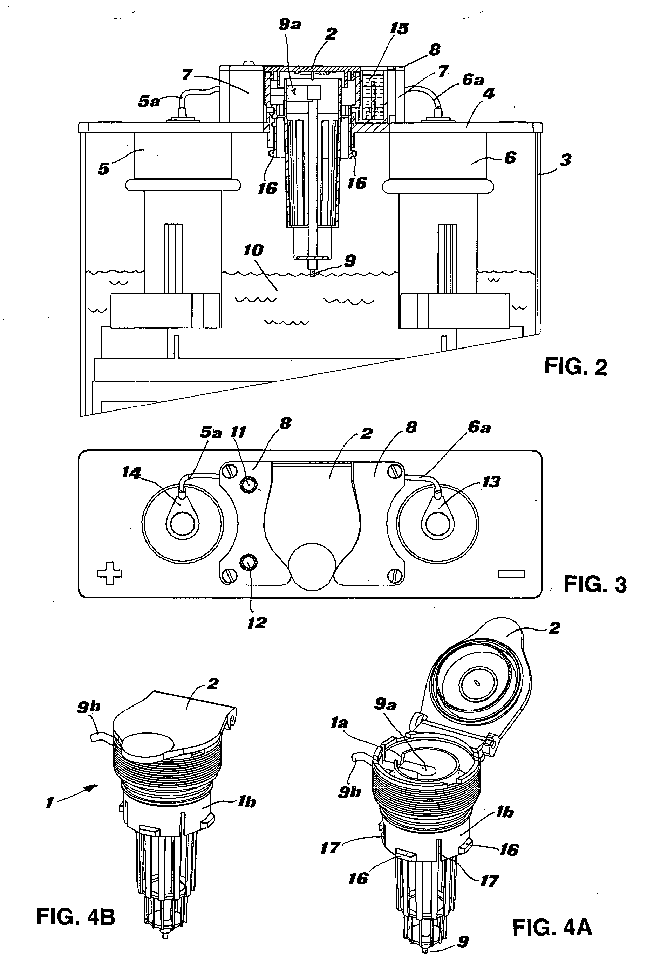

According to the invention, inside cap 1 there is housed a probe of electric potential 9. The probe has a rod-like and elongated body arranged with a vertical attitude, which terminates with one end thereof inside the element at a depth corresponding to the optimal level of electrolyte 10 (as illustrated in figs. 1 and 2).

The rod of the probe intended to be wet by the electrolyte is made of conductive, corrosion-resistant material, for example a special steel.

In the upper part thereof, the probe has a fastening head 9a, by means of which it is fixed to an inner wall 1a of cap 1. An outer wall of the cap in turn has an opening from which a lead wire 9b protrudes, capable of establishing an electric connection between the probe and a control circuit 15.

The latter is housed in a box 7 mounted above the cover of element 3, surrounding and coupling it with the outer part of cover 1.

In particular, box 7 preferably has two lobes arranged on both sides of cover 1, as clearly shown in figs. 1 and 3. The two lobes of box 7 are closed by respective covers 8. According to such embodiment, printed circuit 15, which acts as a small central unit, is housed precisely in one of such lobes.

Preferably, circuit 15 is embedded in a mass of resin, which makes it better protected.

In the opposite lobe of box 7, two LED circuits, are housed instead, the lighting components whereof protrude from cover 8 with two red and green illuminators 11 and 12, respectively.

According to the invention, moreover, two lead wires 5a and 6a protrude from central unit 15 which are connected, through suitable wire ends 13 and 14, to the terminals of the two electrodes 5 and 6.

Through this connection to electrodes 5 and 6, not only is central unit 15 capable of detecting the difference of electric potential between the same, but also of draining that minimum of current required for the operation of the unit, of the probe and of LEDs 11 and 12.

Electric circuit 15 is arranged so as to detect the difference of electric potential existing between the two electrodes 5 and 6 as well as that between either electrode and probe 9. As long as the probe is wet by electrolyte 10, the two values of difference of electric potential are comparable and it is hence established that the level of electrolyte is optimal and the green LED 12 is kept on.

When the level of electrolyte 10 drops below the end of probe 9, a significant imbalance is generated between the two readings of difference of potential: the central unit hence determines a condition of insufficient electrolyte and controls the lighting up of the red LED 11. Under "significant imbalance" it is meant that the difference of potential with respect to the probe is below at least 50%, preferably below 20%, of the difference of potential between the electrodes. According to tests performed by the Applicant, it has been evidenced that with a difference of potential of 1.7 V between the two electrodes of the element, a difference of potential of 1.2 V can be read with a wet probe, and 0.22 V with a dry probe. In substance, when the central unit detects a difference of potential with the probe lower than 0.5 V, the "low level" signal is activated, for example the lighting up of the red LED.

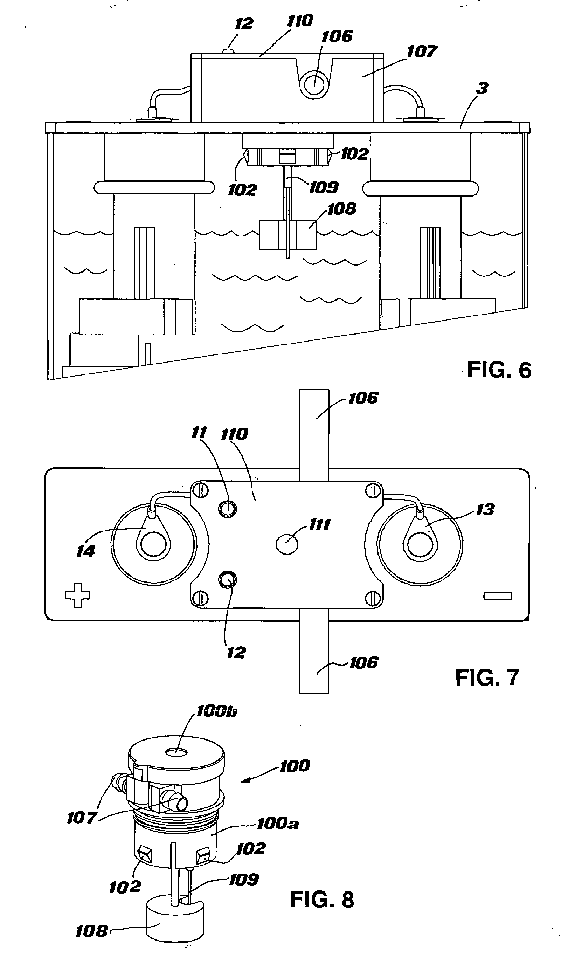

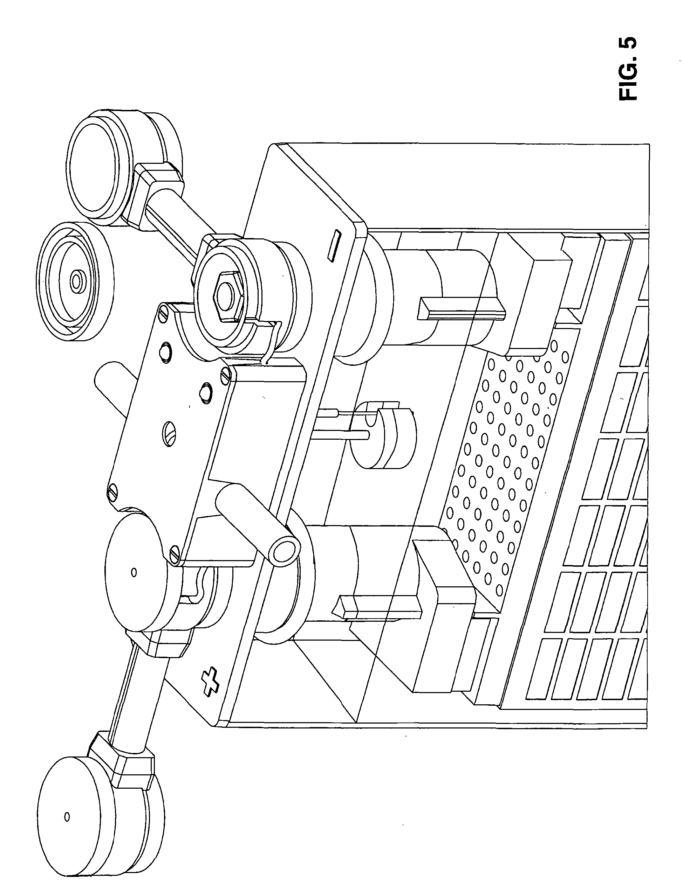

Figs. 5-8 show a second embodiment of the invention.

In this case, element 3 has a cap 100 of the automatic top-up type, for example the TABAMATIC™ model manufactured by Taba S.r.l. Here too, it is preferably provided for the cap to be snap engageable, thanks to the presence of a flexible lower skirt 100a provided with notchings and tabs 102.

Cap 100 does not have a cover which may be opened, but simply a small inspection window 100b.

In the top part of cap 100 there is provided a joint 107 which puts in communication the top-up compartment of the cap with an input pipe and an output pipe, intended to be connected with other similar caps and form a so-called topping-up cap network.

In the lower part, the cap is provided with a float 108 controlling an inner valve, as better described in application IT MI99U000195 in the name of the same Applicant.

According to the invention, there is further provided a probe 109 housed and connected in a fully equivalent way to what has been illustrated with reference to figs.1-4B.

According to this embodiment, since a cover which may be opened for topping up is not provided, box 107 consists of a single element closed by a single small cover 110 from which LEDs 11 and 12 protrude.

On the cover a small window 111 is provided in correspondence of the small inspection window 100b.

Between box 107 and small cover 110 slots are further provided, from which input and output pipes 106 may protrude, connecting with joint 107 of cover 100.

The operation of the device according to this embodiment is fully identical to the one described above for the first embodiment.

As can be guessed, the device according to the invention brilliantly solves the object set forth in the preliminary remarks. As a matter of fact, by arranging a probe in an accumulator element, inside a standard topping-up cap and interfacing it, through a control unit, with the electrodes of the element, it is possible to obtain an immediate detection of the drop of the liquid electrolyte level.

Such detection is made immediately available as a LED light indication, so that the visual inspection by the user is uncomplicated and is performed with the due frequency.

The device of the invention, furthermore, by exploiting the electric current generated by the element, is capable of operating in a fully independent way without requiring any external connection. The central control unit, suitably embedded in resin and housed in the box, remains well protected by the aggressive environment surrounding the accumulator, reducing to a minimum the risk of device malfunctioning.

However, it is understood that the invention is not limited to the particular embodiment shown, which represents only a nonlimiting example of the scope of the invention, but that a number of variants are possible, all within the reach of a person skilled in the field, without departing from the scope of the invention as defined in the accompanying claims.

For example, instead of two red and green lights, a single LED illuminator may be provided, which is controlled by different sequences depending on the condition of the electrolyte level, for example always on or flashing in optimal conditions, and off when the level is too low.

Again, although reference has been made to a device mounted on a single element of the accumulator, it may be assumed that each element of the accumulator could be provided with such an indicator. Preferably, for economy's sake, the device according to the invention will be arranged on the element where the level tends to drop first (of the 6, 12 or more elements which an accumulator is provided with).

According to a more preferred arrangement, the device is arranged on a single element of the accumulator, but the other elements are provided only with a probe of potential which is suitably connected to the central unit 15 of the device. Thereby if the central unit reads an unbalanced difference of potential with reference to one or more of the probes, it controls the lighting up of the warning LEDs (for example the red one). Advantageously, in order to avoid entering probe compensation parameters - related to the fact that the individual probes are found in elements exhibiting a different potential from the others - it has been shown to be convenient to install the device according to the invention on the last element of the accumulator (i.e. the one corresponding to the negative output pole), which guarantees suitable operation when the electrolyte level drops below the preset level in any one of the elements.

## Claims

1. Device for monitoring the electrolyte level in an accumulator for traction, the accumulator being of the type comprising a plurality of elements (3) provided with plates, sunk in liquid electrolyte, integral with a pair of electrodes (5, 6) and of a topping up cap (1, 100), **characterised in that** it comprises
a probe of potential (9, 109), inserted in said topping-up cap (1, 100) up to a depth related to a lower threshold level of the electrolyte,
at least a warning LED (11, 12),
and a control circuit (15), operatively connected to said probe (9, 109), to said at least one LED (11, 12) and to terminals (5a, 6a) of said electrodes (5, 6), said control circuit (15) activating said at least one LED (11, 12) when it detects an imbalance in the difference of potential between the electrodes (5, 6) and to said probe (9, 109).

2. Device as claimed in claim 1), wherein said at least one LED (11, 12), said control circuit (15) and said probe (9, 109) are powered by the current caused to circulate between said electrodes (5, 6).

3. Device as claimed in claim 1) or in claim 2), wherein said control circuit (15) and said at least one LED (11, 12) are arranged in a box (7, 107, 8, 110) mounted across said top-up cover (1, 100).

4. Device as claimed in claim 3), wherein said box (7) is shaped into two lobes arranged at the two sides of a cap (1).

5. Device as claimed in claim 3), wherein said box (107) encloses a cap (100) of the automatic refilling type and has at least two slots wherefrom small tubes (106) to and from said cap (100) protrude.

6. Device as claimed in claim 4) or in claim 5), wherein said box is provided with a small upper cover (2) which may be opened whereon there is mounted said at least one LED (11, 12).

7. Device as claimed in any one of the preceding claims, wherein said central unit (15) is connected with a plurality of probes of potential (9, 109) inserted in respective elements of the accumulator.

8. Filling cap for a device as claimed in any one of the preceding claims, **characterised in that** it comprises a streamlined and elongated probe of potential (9, 109) arranged longitudinally inside it, the probe (9, 109) having a fastening head (9a) engageable with an inner wall (1a) of said cap (1, 100).

9. Cap as claimed in claim 8), wherein an outer wall thereof is provided with a through-opening for the outlet of a conducive wire (9b) of said probe (9, 109).

10. Electric accumulator for traction, of the type comprising a plurality of elements, each of which being provided with a pair of electrodes (5, 6) connected with a plurality of plates sunk in liquid electrolyte (10) and with a topping-up cap (1, 100), **characterised in that** it comprises at least a monitoring device as claimed in any one of the preceding claims.

11. Accumulator as claimed in claim 10), when dependent from claim 7), wherein said warning device is mounted on the element in correspondence of the negative, output pole of the accumulator.
